Europäisches Patentamt

**European Patent Office**

**Office européen des brevets**

(11) Publication number: **0 138 502**
A2

(12) **EUROPEAN PATENT APPLICATION**

(21) Application number: **84306711.7**

(22) Date of filing: **02.10.84**

(51) Int. Cl.⁴: **F 16 K 11/04**

(30) Priority: **03.10.83 US 538440**

(43) Date of publication of application: **24.04.85**
Bulletin 85/17

(84) Designated Contracting States: **DE FR GB IT NL**

(71) Applicant: **ALFA-LAVAL AGRI INTERNATIONAL AB, P O Box 39, S-147 00 Tumba (SE)**

(72) Inventor: **Chowdhury, Mofazzal, 6205 Northwest Karen, Kansas City Missouri 64151 (US)**
Inventor: **Ellis, Michael W., 3351 Northeast 45th Street, Kansas City Missouri 64117 (US)**

(74) Representative: **Lerwill, John et al, A.A. Thornton & Co. Northumberland House 303-306 High Holborn, London, WC1V 7LE (GB)**

(54) **Valve assembly.**

㉗ Valve assembly for alternately connecting one fluid carrying line to each of two other fluid carrying lines in which the first line is removed from one of the second lines to the other in an arcuate path.

ACTORUM AG

- 1 -

## VALVE ASSEMBLY

This invention relates to a valve assembly and in particular to a valve assembly of the type in which one fluid carrying line can be alternately connected to each of two other lines. More specifically, the invention is concerned with a valve assembly for use in the dairy industry for connecting a milk line leading from the milk claw and teat cup liners or "inflations" alternately to a vacuum line, for receiving milk, and to a cleaning line, for receiving "back-flushing" fluids for cleaning the milk claw and the milk line.

Infection of the teats and udder of a cow, generally known as mastitis, can be transmitted among the cows in a herd through the teat inflations or liners of the teat cups, the normal practice being to use the same liner on several cows during one milking session.

One approach to controlling the spread of mastitis has been to wash the inflations manually with a disinfectant solution after every milking. Since it is not feasible to prepare fresh solution for each wash, the solution becomes contaminated and the whole effort becomes fruitless or counter productive. Semi-automatic cleaning of the inflations with plain water has been tried also in the past.

- 2 -

In recent years attempts have been made to systematically clean the inflations between milkings by backflushing or running a clean solution backwardly through the inflations. In general, the backflushing technique includes a pre-rinse cycle for the removal of residual milk from the milk tube and claw cluster, a sanitizing cycle for the removal or elimination of the mastitis causing bacteria from the milk tube and claw cluster, a post-rinse cycle for the removal of the sanitizing solution from the milk tube and claw cluster, and an air dry cycle for removal of the rinse water, and drying. In most backflush systems the length of each of these cycles is adjustable.

In general, backflush systems have been successful in reducing the spread of mastitis and improving udder health. However, problems still remain. Most backflush systems use a slide valve for disconnecting the claw cluster from the milk line and connecting it to the backflush line which furnishes the water, air and sanitizing solution. This valve is the heart of the system because it must be capable of disconnecting the sanitizing solution line without contaminating the milk with sanitizing chemicals.

The design standard for backflush valves is stated in FDA Transmittal 79-13 M-A-65, dated 11-15-79 as follows:

> "An intervening break to the atmosphere
> shall be provided between the water
> and/or chemical solutions and the product
> and/or product contact surfaces at all
> times."

The slide valves currently used in backflushing systems have not been completely successful in meeting this standard because they become plugged by milk or cheese buildup, and can make the intended intervening break non-existent. Milk or cheese build-up in conventional valves leads to vacuum leakage and leakage of sanitizing solution from the solution line to the milkline.

Some of the specific problems associated with current slide valves are:

    a.    The springs used for maintaining tension between sliding parts of the valve tend to get loose or are not properly tightened, with resulting leakage.

    b.    The constant sliding of the valve promotes wear and looseness of the sliding parts, leading to leakage. The problem is aggravated by sand or other abrasive particles often present in farm environments.

    c.    Mechanical or electrical failure of the components associated with the sanitizing solution line leads to mixing of the sanitizing solution with the milk in the milkline. Sliding valves are not generally designed to be fail-safe.

    d.    Slide valves are difficult to clean. In most cases they must be disassembled and cleaned manually using a hand brush. Such practice is not compatible with modern farm automation and the nearly continuous use of dairy equipment for 20 to 22 hours of continuous milking.

In accordance with the present invention, there is provided a valve assembly in which a primary conduit can be alternately connected to two secondary conduits, the relative movement between said primary conduit on the one hand and the two secondary conduits on the other being arcuate in nature and through an open space. Because the movement is arcuate the disconnection and connection of the primary conduit with the secondary conduits is axial of the conduits, avoiding shear, minimizing abrasion and wear and avoiding the smearing of the fluids being conveyed or adjacent surfaces. Because the movement is through an open space, there is little or no chance of transmission of fluid from one secondary conduit to the other.

The invention will be further described with reference to the accompanying drawings in which:

Figure 1 is a view in side elevation of a preferred form of valve assembly according to the invention.

Figure 2 is a view in front elevation, taken from the left in Fig. 1.

Figure 3 is a plan view of the assembly of Fig. 1.

Figure 4 is a plan view of the beam and linkage elements of the valve assembly of Figure 1.

Figure 5 is a view in elevation of the angle bracket used to join the air piston to the beam linkage in the device of Figure 1.

Figure 6 is detailed view of the tube and nipple feeding into the valve of Fig. 1.

Figure 7 is a view in side elevation of an alternative embodiment of a valve assembly according to the invention.

Figure 8 is a front elevational view of the device of Figure 7 (taken from the left of Fig. 7) showing the relationship between the several linkages.

Figure 9 is a plan view of the device of Fig. 7.

Figure 10 is a view in front elevation showing the connection between the drive link and the hose ring in the device of Figure 7.

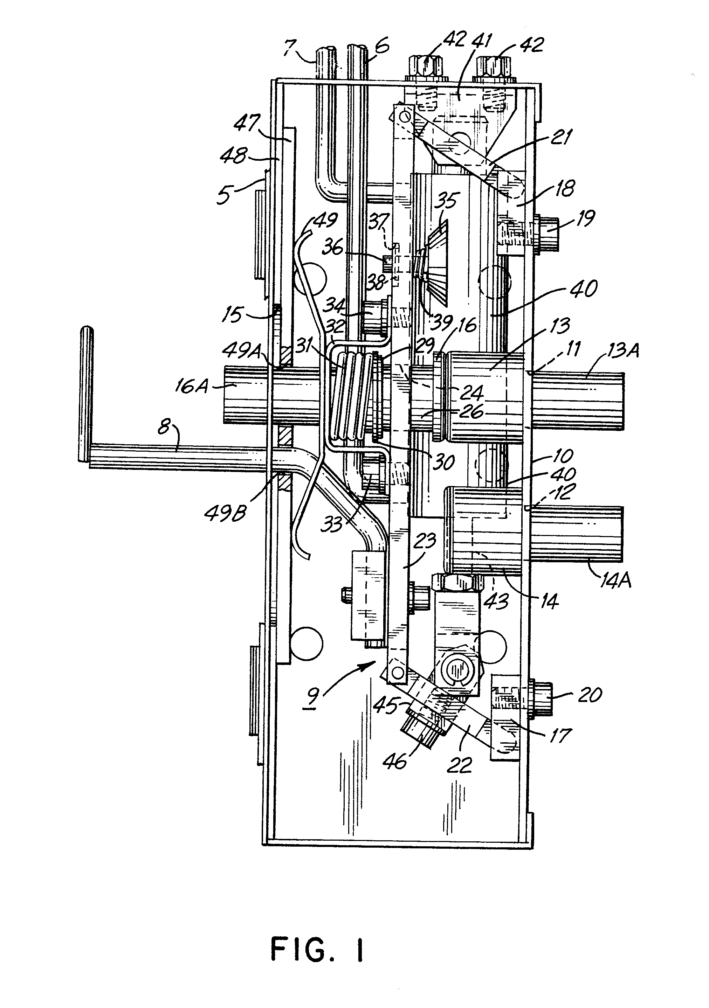

Referring first to Figures 1-6, a valve assembly according to the invention is positioned in a box or container 10 which will normally but not necessarily be mounted with its long axis vertical as shown in Figure 1. A hinged cover 5 is provided for the box 10. On one side of the container are provided apertures 11, 12 for two nipples 13 and 14 to which are attached tubes 13A and 14A. The nipples may be fixed to the wall of the box, as by welding.

On the opposite wall of the box is provided an elongated aperture 15 to accomodate a third tube 16A to which is connected a nipple 16. The tube 16A is not fixed to the wall of the box 10 but is free to move up and down in aperture 15.

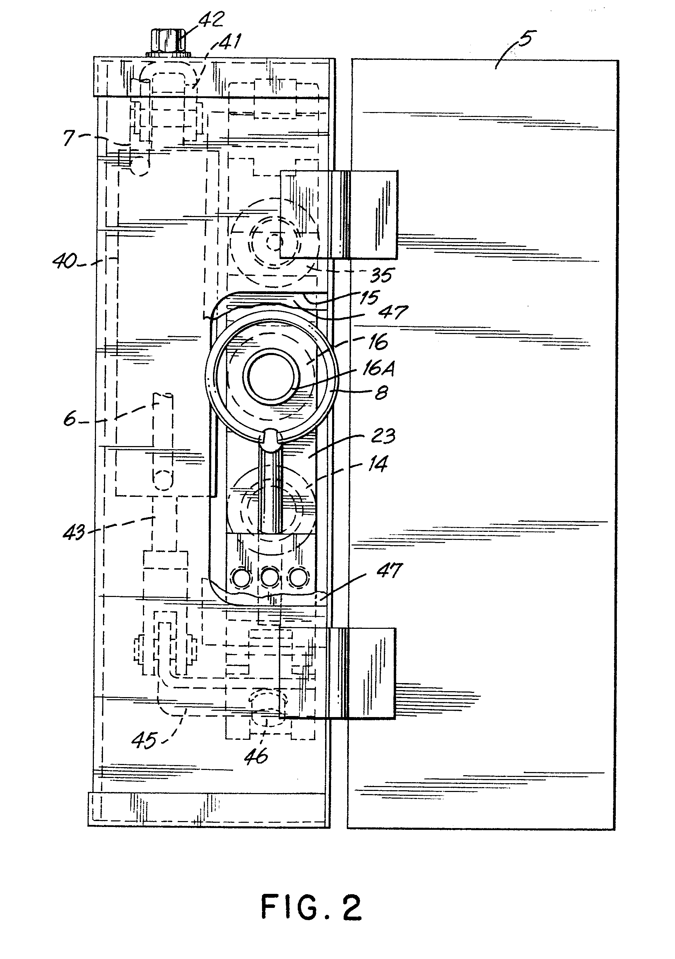

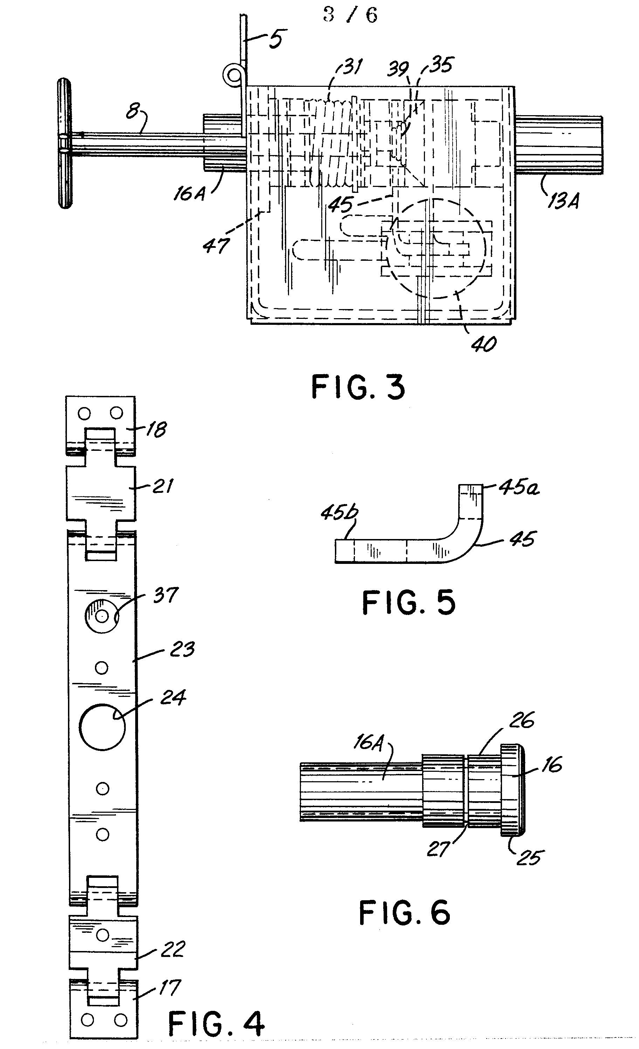

Inside the box is located a linkage system indicated generally as 9. This system comprises two base links 17 and 18 which are fixed to the wall of the box 10 by screws 19, 20. Pivotally connected at one end to the base links 17, 18 are connecting links 21, 22. Each of the connecting links 21, 22 is connected at its other end to an end of a main link or beam 23. The relationship and dimensions of the links can be seen more clearly from Figure 2. As will appear from that figure, the beam 23 is fairly broad and has a number of holes or apertures. One of these, 24, accommodates the nipple 16. As shown in Figure 6, this nipple has a head 25, and an extended section 26 with a groove 27. Tube 16A fits into section 26. In assembly the upper section 26 is fitted through the aperture 24 in the beam 23 and a retaining ring 29 is snapped into groove 27. A washer 30 is then slid over the nipple 16 to rest on retaining ring 29. A helical coil spring 31 is placed over the washer 30 and is retained by a channel member 32 which is fixed to beam 23 by screws 33, 34.

Also fixed to the beam 23 is a hose support bracket 8 which may be used to carry a hose (not shown) attached to tube 16A.

A slide plate 47 is provided to close aperture 15. It is held against the wall 48 of the container 10 by a bow spring 49 which bears against the plate 47 and channel member 32. Holes 49A and 49B are provided in plate 47 to accomodate tube 16A and the hose support bracket 8.

The beam 23 further carries a seal or cover 35. Cover 35 has a shaft 36 which passes through a counter-sunk aperture 37 in beam 23 and is held loosely therein by a retaining ring 38 which has a snap fit on shaft 36. Cover 35 is urged downwardly by a spring 39 which is inserted between the beam 23 and the cover 35.

The linkage 9 is operated by means of a pneumatic cylinder 40. Cylinder 40 is mounted in a bracket 41 fastened to the top of box 10 by bolts 42. Cylinder 40 is positioned behind the linkage assembly 9, as the device is shown in Figure 1. It acts on the linkage assembly through a piston 43 whose end is threaded and connected to the short arm 45a of an L-shaped element 45 (Figure 5) whose long arm 45b is attached to connecting link 22 by screw 46.

In operation, in a milk processing context, the tube 16 is connected to the milk line (not shown) leading to the milk claw and the inflations. (not shown) The tube 13A is connected to the vacuum line (not shown) for receiving the milk from the milk line attached to tube 16A. The tube 14A is attached to the backflush line (not shown).

In the position shown in Figure 1 milk will flow from the cow being milked through the tube 16A, into the nipple 13, tube 13A and thence to a collection device for further processing. After the particular animal has been milked, through a series of signals whose generation is not pertinent to the invention and not shown in the drawing, compressed air will be admitted to the upper end of cylinder 40 through tube 7, driving piston 43 downward in Figure 1. Piston 43 will rotate connecting link 22 downwardly in an arcuate movement.

At the same time nipple 16 and tube 16A will be separated from nipple 13 and moved in an arcuate path to connect with nipple 14, being forced down against nipple 14 by the pressure of spring 31. This movement is accompanied by sliding of the plate 47 downwardly with the tube 16A. At the same time the vacuum line and nipple 13 will be sealed by cover 35 under action of spring 39.

With the nipples 14 and 16 connected, backwashing fluids can be sent through tube 14A nipple 14, nipple 16 and tube 16A to the milk claw and inflations, cleaning them and finally drying them. When the backwash cycle is completed, air may be admitted to the lower end of cylinder 40, through tube 6, forcing the piston upwardly and moving nipple 16 back to connect with nipple 13 as shown in Figure 1.

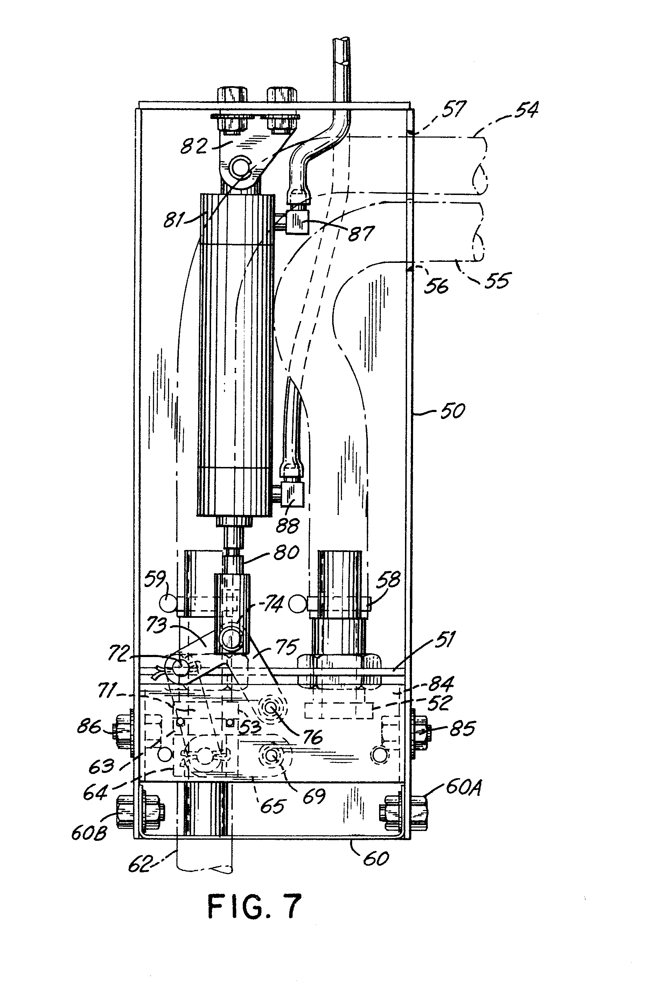

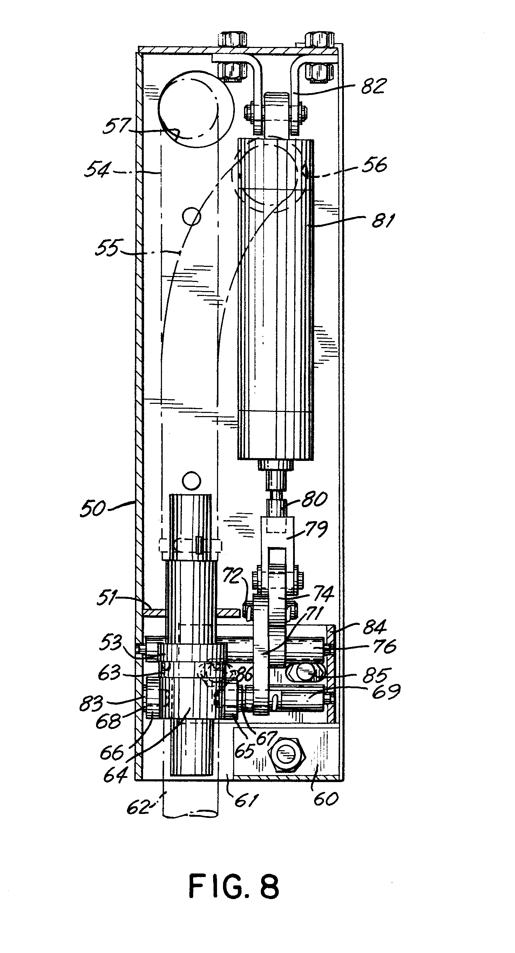

Figs. 7 to 10 show an alternative form of the invention. Again, the valve assembly is mounted in a rectangular container or box 50 whose longitudinal axis is generally vertical. A partition 51 which is about half the depth of the box 50 is attached to the bottom and sides of the box as by welding. This partition 51 has two apertures in which are mounted nipples 52, 53. Two conduits 54, 55 are led through apertures 56, 57 in the wall of the box 50 and secured to the nipples 52, 53 by hose clamps 58, 59.

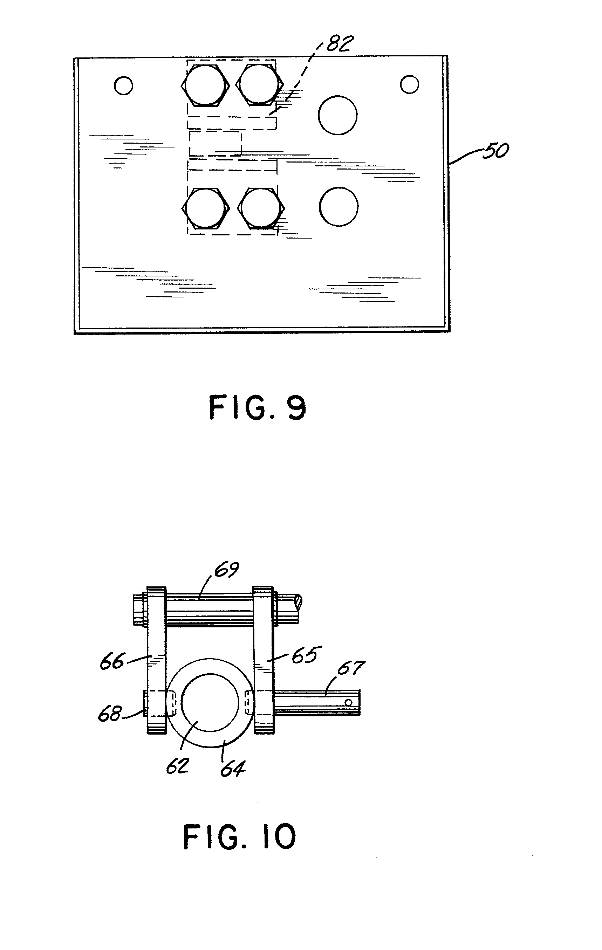

The bottom of box 50 is only partially closed by a channel member 60, which is bolted to the sides of the box at 60a and 60b, leaving a space 61 extending across the width of the box. In this space is inserted a flexible conduit 62 to which is fixed a nipple 63. The conduit 62 carries at a point near its end, a pivot ring 64 (Fig. 6). As shown in Fig. 10, the pivot ring 64 is supported between two pivot links 65, 66 by pins 67, 68. The pivot links are separated at their other end by a spacer pin 69. Spacer pin 69 is pivotally mounted in the wall of the box and in a second channel member 84 which is secured to box 50 by bolts 85, 86.

The pin 67 is pivotally attached to one end of a driving link 71 which, at the other end, is pivotally attached by a pin 72 to the end of one leg 73 of an L-shaped link 74. The other leg 75 of link 74 is pivotally attached to the channel member 84 by pin 76.

At the angle of L-shaped member 74, it is pivotally mounted in a yoke 79 which is threaded on the end of a piston 80 which is operated by pneumatic cylinder 81 mounted in the box 50 on bracket 82.

Assuming the device is to be used in a milking operation, the conduit 54 is a vacuum line for receiving milk, and the conduit 55 is a backflushing line. The conduit 62 is the milk line from the milk claw and inflations.

In the position shown in Figs. 7 to 10, the conduit 62 is connected to the vacuum line 54. After washing is completed air will be admitted, through a valve not shown, and through conduit 87, to the upper end of the cylinder 81. Piston 80 will move down, causing L-shaped link 74 to rotate about the pin 76 thus swinging drive link 71 and pivot links 65, 66 about spacer pin 69. The conduit 62, being attached to the links 65, 66 by pivot ring 64, swings downwardly away from nipple 53 in an arcuate path unitl its nippl: 63 closes with nipple 62, thus connecting the milk claw and the inflations with the back washing system. After back washing is completed, air may be furnished to conduit 88 of the pneumatic cylinder 81, forcing piston 80 upwardly and swinging conduit 62 and nipple 63 back into engagement with the nipple 53 and the vacuum system.

Although the invention has been described in connection with a milking system it is clearly applicable to various other fluid systems where a positive disconnect of fluid transport lines is desired. Similarly, although the system is shown as pneumatically operated, hydraulic or electrical driving means could be employed.

What is claimed is:

1. Valve assembly for joining a primary conduit to each of two secondary conduits, said valve assembly comprising means for moving the end of said primary conduit from a position in which it is joined to one of said secondary conduits in an arcuate path to a position in which it is joined to the other of said secondary conduits.

2. Valve assembly for connecting a first conduit alternately to each of a second and third conduit, said assembly comprising a beam, means securing an end of said first conduit to said beam, support means, means securing said second and third conduit to said support means, links pivotally secured to each end of said beam and pivotally mounted at points on said support, and means for swinging said links in arcs about said support points, thereby to move said beam and the end of the first conduit in an arcuate path from a position connecting with one of said second and third conduits to a position connecting with the other of said second and third conduits.

3. The valve assembly claimed in claim 2 and including spring loaded means for urging said first conduit against that one of the second and third conduits with which it is engaged.

4. The valve assembly claimed in claim 2 and including pneumatic means for moving said links and beam.

5. The valve assembly claimed in claim 2 and including a cover mounted on said beam and positioned to close one of said second and third conduits when said first conduit is connected to the other of said second and third conduits.

6. A valve assembly for connecting a milk line alternately to a vacuum line and to a line for furnishing cleaning fluid comprising a beam, means securing the end of said milk line to the beam, support means, means securing an end of said vacuum line and an end of said cleaning fluid line to said support means and means for swinging said beam in an arcuate path to move said milk line between said vacuum line and said line for furnishing cleaning fluid.

7. The valve assembly claimed in claim 6 and including a cover mounted on said beam for sealing said vacuum line when said milk line is connected to the cleaning fluid line.

8. Valve assembly for connecting a first conduit alternately to a second conduit and a third conduit comprising a support, means securing for an end of each of said second and third conduits to said support, an L-shaped link, means pivotally mounting one end of said L-shaped link on said support, a first drive link pivotally connected at one end to the other end of said L-shaped link, a second drive link, one end of said second drive link being pivotally connected to the other end of said first drive link and to said first conduit, means pivotally mounting the other end of said second drive link on said support, a piston pivotally connected to said L-shaped link at its apex and means for reciprocating said piston to move the end of said first conduit in an arcuate path between the ends of said second and third conduits.

9. The valve assembly claimed in claim 8 and including pneumatic means for driving said piston.

10. Valve assembly for connecting a milk line alternately to a vacuum line and to a backflushing line for furnishing cleaning fluids comprising a support, means for securing said vacuum line and said backflushing line to said support, an L-shaped link pivotally mounted at one end in said support, a first drive link pivotally connected at one end to the other end of said L-shaped link, a second drive link, one end of said second drive link being connected to the other end of said first drive link and to said milk line, means pivotally mounting the other end of said second drive link to said support, and reciprocating drive means pivotally attached to the apex of said L-shaped link to rotate said L-shaped link about its said one end, thereby moving said milk line in an arcuate path between said vacuum line and said backflushing line.

11. The valve assembly claimed in claim 10 and comprising a pivot ring attached to said milk line and pivotally attached to said second drive link.

12. The valve assembly claimed in claim 10 wherein said drive means comprises a pneumatic cylinder.

FIG. 1

FIG. 2

FIG. 3

FIG. 4

FIG. 5

FIG. 6

FIG. 7

FIG. 8

FIG. 9

FIG. 10